# FASCICULE DE BREVET EUROPEEN

(11) **EP 3 374 736 B1**
(45) Date de publication et mention de la délivrance du brevet: **11.09.2019**
(21) Numéro de dépôt: 16791645.1
(22) Date de dépôt: 09.11.2016
(51) Int. Cl.: G01C 25/00, G01C 21/16

(54) **PROCÉDÉ D'ÉLABORATION D'UNE NAVIGATION ET PROCÉDÉ D'ORIENTATION D'UN ORGANE DE VISÉE À PARTIR DE CETTE NAVIGATION**
VERFAHREN ZUM ENTWURF EINES NAVIGATIONSPFADES UND VERFAHREN ZUR AUSRICHTUNG EINES SICHTUNGSELEMENTS VON DIESEM NAVIGATIONSPFAD
METHOD FOR DESIGNING A NAVIGATION PATH AND METHOD FOR ORIENTING A SIGHTING MEMBER FROM SAID NAVIGATION PATH

(30) Priorité: 10.11.2015 FR 1560751
(43) Date de publication de la demande: 19.09.2018
(73) Titulaire: Safran Electronics & Defense, 92100 Boulogne-Billancourt (FR)
(72) Inventeur: DAVAIN, Loïc, 92100 Boulogne-Billancourt (FR); FABIEN, Simon, 92100 Boulogne-Billancourt (FR)
(74) Mandataire: Lavialle, Bruno François Stéphane
(86) Numéro de dépôt international: PCT/EP2016/077178
(87) Numéro de publication internationale: WO 2017/081104

(56) Documents cités:
- FR-A1- 2 781 888
- JEFFREY M. MASTERS ET AL: "Correction of Inertial Navigation with Loran C on NOAA's P-3 Aircraft", JOURNAL OF ATMOSPHERIC AND OCEANIC TECHNOLOGY, vol. 10, no. 2, 1 avril 1993 (1993-04-01), pages 145-154, XP055291395, US ISSN: 0739-0572, DOI: 10.1175/1520-0426(1993)010<0145:COINWL>2.0 .CO;2
- DAVAIN L ET AL: "Dedicated algorithm for line of sight stabilization and orientation", 2015 DGON INERTIAL SENSORS AND SYSTEMS SYMPOSIUM (ISS), IEEE, 22 septembre 2015 (2015-09-22), pages 1-22, XP032803684, DOI: 10.1109/INERTIALSENSORS.2015.7314271

## Description

La présente invention concerne l'élaboration d'une navigation à partir de données inertielles de navigation et de données non inertielles de navigation. Par « navigation », on entend un ensemble de données de positionnement, de vitesse et d'attitude d'un porteur d'un système de navigation. Cette navigation peut être utilisée pour l'orientation d'un dispositif de visée par exemple, pour le pointage d'une arme ou pour l'alignement d'une centrale inertielle sur une autre.

### ETAT DE LA TECHNIQUE

Dans la première application précitée, c'est-à-dire l'orientation d'une ligne de visée à partir de données de navigation, il est connu par exemple d'utiliser un dispositif de visée sous la forme d'une boule optronique gyrostabilisée embarquée sur un véhicule porteur tel qu'un aéronef. La boule optronique est orientée par un ensemble de motorisation agencé pour permettre de viser une cible et pour maintenir cette visée indépendamment des mouvements du véhicule porteur par exemple pour des applications de poursuite. Ainsi, la boule optronique est orientée par rapport au véhicule porteur pour compenser les mouvements du véhicule porteur.

Pour ce faire, la commande de la boule optronique incorpore une boucle d'asservissement exploitant les données d'attitudes fournies par le système de navigation du véhicule porteur pour orienter la boule optronique en fonction de l'attitude du véhicule porteur.

Il existe deux types principaux de système de navigation : les systèmes de navigation inertielle pure n'utilisant que les données d'une ou plusieurs centrales inertielles et les systèmes de navigation hybridées utilisant un filtre de Kalman mêlant les données d'une centrale inertielle et les données d'autres capteurs (par exemple un capteur de vitesse du véhicule ou un récepteur de signaux satellitaires de géolocalisation).

Une navigation inertielle pure est peu bruitée mais présente de fortes erreurs en particulier de dérive angulaire. L'utilisation de données inertielles pures pour l'orientation de la boule optronique va donc engendrer un décalage de la cible dans l'image, la cible sortant rapidement du champ de l'image. Il est prévu dans ce cas une commande manuelle de compensation qui est effectuée par l'opérateur.

Une navigation hybridée est précise mais présente des variations importantes de valeurs lors du recalage du filtre de Kalman. L'utilisation de données hybridées pour orienter la boule optronique permet donc de conserver la cible au centre de l'image mais avec un déplacement régulier du champ visuel qui se révèle gênant et visuellement fatiguant à l'usage par un opérateur humain.

La deuxième application précitée, c'est-à-dire l'alignement d'une navigation inertielle sur une navigation de référence, intervient lorsqu'un véhicule porteur embarque un système de navigation inertielle pure, de référence, et un système de navigation hybridée. Il est d'usage d'aligner le système de navigation hybride sur le système de navigation de référence à partir de la navigation inertielle pure fournie par ce dernier. En effet, les recalages de la navigation hybride de la centrale de référence sont appréhendés par le système de navigation à aligner comme résultant de la dynamique, ce qui perturbe son fonctionnement. L'utilisation de la navigation inertielle pure fournie par la centrale de navigation de référence pour aligner la centrale de navigation à aligner n'est pas non plus idéale car elle induit une forte dérive de la centrale de navigation en cours d'alignement. Ces erreurs sont caractérisées par une oscillation à la période de Schuler (période de 84 min). Il faut ainsi dans tous les cas effectuer un recalage spécifique à la fin de l'alignement.

Il est connu par ailleurs du document FR-A-2781888 un procédé de compensation des mouvements d'un véhicule porteur pour des radars à antenne synthétique. Il est prévu dans ce procédé de combiner une navigation purement inertielle et d'une navigation hybridée en faisant intervenir un filtre de Kalman. Dans ce document, les actualisations normalement fournies par le filtre de Kalman ne sont pas disponibles pendant la période de formation des images radars.

Par ailleurs, il est connu du document "Correction of Inertial Navigation with Loran C on NOAA's P-3 Aircraft",Jeffrey M. Masters et al., Journal of Atmospheric and Oceanic Technology, vol. 10, no. 2, 1 avril 1993 (1993-04-01), pages 145-154, un procédé de réduction d'erreurs en position et vitesse dans une navigation inertielle basée sur un post-traitement à base de filtres symétriques.

### OBJET DE L'INVENTION

Il serait donc intéressant de disposer d'une navigation ne présentant pas d'à-coups dus aux recalages du filtre de Kalman.

### BREF EXPOSE DE L'INVENTION

A cet effet, on prévoit, selon l'invention, un procédé d'élaboration d'une navigation à partir d'un système de navigation inertielle hybride embarqué sur un véhicule, le système de navigation étant agencé pour calculer une première navigation, hybride, en utilisant un filtre de Kalman recevant des données inertielles de navigation et des données non inertielles de navigation. Le procédé comprend les étapes de :
- faire calculer, par le système de navigation inertielle hybride, une deuxième navigation, inertielle, à partir des données inertielles de navigation,
- calculer en temps réel un écart entre la première navigation et la deuxième navigation et effectuer sur cet écart un filtrage passe-bas ayant un temps de convergence supérieur à la période du filtre de Kalman et inférieur à la période de Schuler,
- corriger la deuxième navigation au moyen de l'écart filtré.

Ainsi, la deuxième navigation corrigée va bénéficier de l'absence de bruit d'une navigation purement inertielle (la deuxième navigation non corrigée) et de la précision d'une navigation hybride (la première navigation). Le calcul de l'écart entre les deux navigations est en outre effectué en temps réel de sorte que la deuxième navigation corrigée est disponible à tout moment. La constante de temps du filtre passe-bas est choisie pour chaque application en fonction du niveau de précision et du niveau de bruit attendu pour la deuxième navigation corrigée.

L'invention a également pour objet un procédé d'orientation d'un dispositif de visée embarqué sur un véhicule pourvu d'un système de navigation inertielle hybride mettant en oeuvre le procédé ci-dessus et dans lequel la deuxième navigation corrigée est utilisée pour orienter le dispositif de visée.

L'invention concerne en outre un procédé d'alignement d'un premier système de navigation inertielle sur un deuxième système de navigation inertielle hybride mettant en oeuvre le procédé ci-dessus, et dans lequel le premier système de navigation inertielle est aligné sur la deuxième navigation corrigée.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue schématique d'un véhicule équipé d'un dispositif de visée pour une première mise en oeuvre du procédé selon l'invention,
- la figure 2 est une vue schématique d'un véhiculer équipé de deux centrales de navigation inertielles pour une deuxième mise en oeuvre du procédé selon l'invention,
- la figure 3 est un schéma illustrant le processus de calcul des navigations pour ces deux mises en oeuvre de l'invention.

### DESCRIPTION DETAILLEE DE L'INVENTION

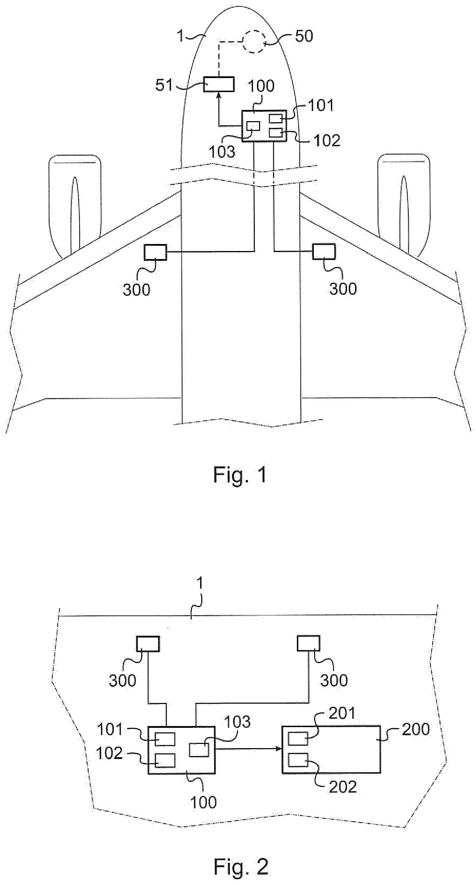

Deux mises en oeuvre de l'invention vont maintenant être décrites en référence respectivement aux figures 1 et 2.

Dans la première mise en oeuvre, en référence à la figure 1, l'invention est décrite en application à un aéronef 1 équipé :
- d'un dispositif de visée sous la forme d'une boule optronique 50 gyrostabilisée et motorisée, qu'il faut orienter,
- d'un premier système de navigation 100, et
- de capteurs 300 de données de navigation tels que par exemple un récepteur de signaux satellitaires de géolocalisation, un capteur de vitesse, un capteur d'altitude baro-altimétrique...

La motorisation de la boule optronique 50 est reliée à un dispositif de commande 51 disposé dans le poste de pilotage de l'aéronef et permettant à un opérateur de piloter l'orientation de la boule optronique 50 et de visualiser les images capturées par ladite boule optronique 50.

Le système de navigation 100 est un système de navigation hybride comprenant une unité de traitement 101 reliée à un noyau inertiel 102, connu en lui-même, et aux capteurs 300.

Le système de navigation 100 comprend aussi une unité de traitement 103 reliée à l'unité de traitement 101 pour échanger des informations avec celles-ci.

Les unités de traitement 101 et 103 sont reliées à une unité de pilotage 51 permettant au pilote de l'aéronef de programmer une route à suivre et d'accéder aux données de navigation.

La structure physique des différents éléments énoncés précédemment est connue en elle-même et ne sera pas plus détaillée ici.

L'unité de traitement 101 fait appel à un filtre de Kalman pour calculer, de manière connue en elle-même, une première navigation N1, hybride, à partir des données inertielles de navigation fournies par le noyau inertiel 102 et des données non inertielles de navigation fournies par les capteurs 300.

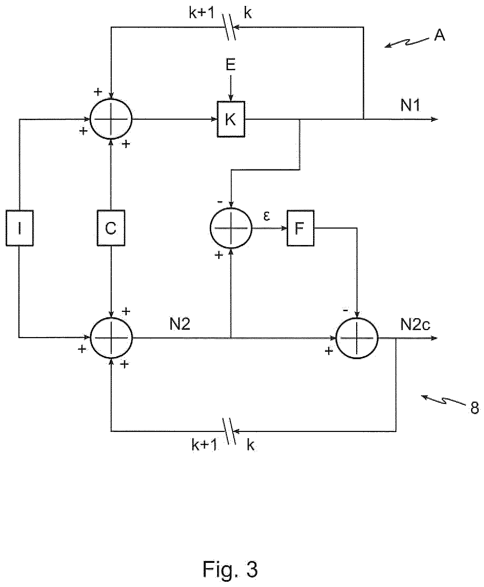

L'unité de traitement 103 est agencée pour fournir au dispositif de commande 51 une navigation corrigée N2c dont le calcul sera explicité plus loin en relation avec la figure 3.

Lors de l'utilisation de la boule optronique 50, il est possible de viser une zone du champ couvert par la boule optronique et de commander la motorisation de la boule optronique 50 pour maintenir ledit élément au centre du champ couvert quelles que soient les évolutions de l'aéronef. Le dispositif de commande 51 est programmé pour commander la motorisation de la boule optronique 50 en utilisant la navigation corrigée N2c qui lui est fournie par l'unité de traitement 103.

Dans la deuxième mise en oeuvre, en référence à la figure 2, l'invention est décrite en application à un aéronef 1 équipé :
- d'un premier système de navigation 100,
- de capteurs 300 de données de navigation tels que par exemple un récepteur de signaux satellitaires de géolocalisation, un capteur de vitesse, un capteur d'altitude baro-altimétrique...
- d'un deuxième système de navigation 200, à aligner.

Le système de navigation 100 est un système de navigation hybride comprenant une unité de traitement 101 reliée à un noyau inertiel 102, connu en lui-même, et aux capteurs 300.

Le système de navigation 100 comprend aussi une unité de traitement 103 reliée à l'unité de traitement 101.

Les unités de traitement 101 et 103 sont reliées au deuxième système de navigation 200 qui comprend une unité de traitement 201 reliée à un noyau inertiel 202 connu en lui-même.

La structure physique des différents éléments énoncés précédemment est connue en elle-même et ne sera pas plus détaillée ici.

L'unité de traitement 101 fait appel à un filtre de Kalman pour calculer, de manière connue en elle-même, une première navigation N1, hybride, à partir des données inertielles de navigation fournies par le noyau inertiel 102 et des données non inertielles de navigation fournies par les capteurs 300.

L'unité de traitement 103 est agencée pour fournir au deuxième système de navigation 200 une navigation corrigée N2c dont le calcul sera explicité plus loin en relation avec la figure 3.

Le système de navigation 200 utilise la navigation corrigée N2c fournie par l'unité de traitement 103 pour s'aligner sur le système de navigation 100. Le processus d'alignement est connu en lui-même et ne sera pas décrit plus en détail ici.

Sur la figure 3 est représenté le processus de calcul de la navigation corrigée N2c conformément à l'invention.

Le calcul effectué par l'unité de traitement 101 pour fournir la première navigation N1 est symbolisé par la boucle A incorporant le filtre de Kalman K recevant les données inertielles de navigation I et les données non inertielles de navigation E. Le calcul effectué à chaque instant k sert de base au calcul effectué à l'instant k+1. La première navigation N1 est donc une navigation hybride.

Conformément à l'invention, l'unité de traitement 103 est programmée pour calculer une deuxième navigation N2, inertielle, à partir des données inertielles de navigation. Le mode de calcul de la deuxième navigation N2 est classique.

Sur la figure 3, ce calcul est symbolisé par la boucle B recevant les données inertielles de navigation I (ce sont les mêmes données inertielles que celles reçues par l'unité de traitement 101). Le calcul effectué à chaque instant k sert de base au calcul effectué à l'instant k+1. La deuxième navigation N2 est donc une navigation inertielle.

On notera que les boucles A et B sont affectée du même biais symbolisé en C.

L'unité de traitement 103 est en outre programmée pour calculer en temps réel un écart ε entre la première navigation N1 et la deuxième navigation N2 et effectuer sur cet écart un filtrage passe-bas F ayant un temps de convergence grand par rapport à la période du filtre de Kalman K et petit par rapport à la période de Schuler. On rappelle que la période de Schuler vaut 84 minutes alors que la période du filtre de Kalman vaut quelques secondes. Le temps de convergence est par exemple déterminé par la méthode de Monte Carlo en estimant le niveau de performance de navigations réalisées sur un simulateur représentatif du système de navigation à partir de mesures inertielles affectées d'erreurs sélectionnées aléatoirement.

L'unité de traitement 103 utilise l'écart ε filtré pour corriger la deuxième navigation N2 et obtenir une navigation corrigée N2c. L'écart ε est le résultat de la soustraction de la première navigation N1 à la deuxième navigation N2 et la navigation N2c est le résultat de la soustraction de l'écart ε filtré à la deuxième navigation N2.

La navigation corrigée N2c est utilisée ici pour deux opérations.

Lors de l'utilisation de la boule optronique 50, il est possible de viser une zone du champ couvert par la boule optronique et de commander la motorisation de la boule optronique 50 pour maintenir ledit élément au centre du champ couvert quelles que soient les évolutions de l'aéronef. Le dispositif de commande 51 est programmé pour commander la motorisation de la boule optronique 50 en utilisant la troisième navigation N2c.

En variante, dans le deuxième mode de réalisation, si la navigation corrigée N2c est élaborée dès le début de l'alignement, on pourra prévoir de sélectionner un temps de convergence dans un premier temps égal à la période du filtre de Kalman puis de l'augmenter selon une loi d'évolution temporelle vers la valeur optimale obtenue par simulation.

Bien entendu, l'invention n'est pas limitée aux modes de réalisation décrits mais englobe toute variante entrant dans le champ de l'invention telle que définie par les revendications.

En particulier, la deuxième navigation corrigée N2c peut être utilisée pour l'orientation de la visée, pour l'alignement ou pour d'autres applications.

Il est possible de combiner les deux modes de mise en oeuvre sur un même véhicule porteur.

Les unités de traitement 101 et 103 peuvent n'être qu'une seule et même unité de traitement.

L'invention est applicable à d'autres porteurs que les aéronefs.

## Revendications

1. Procédé d'élaboration d'une navigation à partir d'un système de navigation inertielle hybride embarqué sur un véhicule (1), le système de navigation étant agencé pour calculer une première navigation, hybride (N1), en utilisant un filtre de Kalman recevant des données inertielles de navigation (I) et des données non inertielles de navigation (E), **caractérisé en ce que** le procédé comprend les étapes de :
- faire calculer, par le système de navigation inertielle hybride, une deuxième navigation, inertielle (N2), à partir des données inertielles de navigation,
- calculer en temps réel un écart (ε) entre la première navigation et la deuxième navigation et effectuer sur cet écart un filtrage passe-bas ayant un temps de convergence supérieur à une période du filtre de Kalman et inférieur à la période de Schuler,
- corriger la deuxième navigation au moyen de l'écart filtré.

2. Procédé d'orientation d'un dispositif de visée (50) embarqué sur un véhicule pourvu d'un système de navigation inertielle hybride mettant en oeuvre le procédé selon la revendication 1, dans lequel la deuxième navigation corrigée est utilisée pour orienter le dispositif de visée.

3. Procédé d'alignement d'un premier système de navigation inertielle sur un deuxième système de navigation inertielle hybride mettant en oeuvre le procédé selon la revendication 1, dans lequel le premier système de navigation inertielle est aligné sur la deuxième navigation corrigée (N2c).

4. Procédé selon la revendication 3, dans lequel la deuxième navigation corrigée est élaborée dès le début de l'alignement, le temps de convergence du filtre passe-bas est dans un premier temps choisi pour être égal à la période du filtre de Kalman puis le temps de convergence est dans un deuxième temps augmenté selon une loi d'évolution temporelle vers une valeur prédéterminée.

## Patentansprüche

1. Verfahren zum Erstellen einer Navigation ausgehend von einem hybriden inertialen Navigationssystem, das sich an Bord eines Fahrzeugs (1) befindet, wobei das Navigationssystem ausgebildet ist, um eine hybride erste Navigation (N1) zu berechnen, indem ein Kaiman-Filter verwendet wird, der inertiale Navigationsdaten (I) und nicht-inertiale Navigationsdaten (E) empfängt, **dadurch gekennzeichnet, dass** das Verfahren die Schritte umfasst:
- Berechnen durch das hybride inertiale Navigationssystem einer inertialen zweiten Navigation (N2) anhand der inertialen Navigationsdaten,
- Berechnen in Echtzeit einer Differenz (ε) zwischen der ersten Navigation und der zweiten Navigation und Durchführen einer Tiefpassfilterung an dieser Differenz, wobei die Tiefpassfilterung die eine Konvergenzzeit hat, die größer als eine Periode des Kalman-Filters und kleiner als die Schuler-Periode ist,
- Korrigieren der zweiten Navigation mittels der gefilterten Differenz.

2. Verfahren zum Ausrichten einer Zielvorrichtung (50), die an Bord eines Fahrzeugs ist, das mit einem hybriden inertialen Navigationssystem ausgestattet ist, welches das Verfahren nach Anspruch 1 durchführt, bei dem die korrigierte zweite Navigation verwendet wird, um die Zielvorrichtung auszurichten.

3. Verfahren zur Ausrichtung eines ersten inertialen Navigationssystems auf ein zweites hybrides inertiales Navigationssystem, welches das Verfahren nach Anspruch 1 durchführt, bei dem das erste inertiale Navigationssystem auf das korrigierte zweite Navigationssystem (N2c) ausgerichtet ist.

4. Verfahren nach Anspruch 3, bei dem die korrigierte zweite Navigation ab dem Beginn der Ausrichtung erstellt wird, wobei die Konvergenzzeit des Tiefpassfilters zunächst gewählt wird, um gleich der Periode des Kalman-Filters zu sein, und dann die Konvergenzzeit zu einem späteren Zeitpunkt gemäß einem Gesetz der zeitlichen Entwicklung in Richtung eines vorbestimmten Wertes erhöht wird.

## Claims

1. A method of performing a navigation calculation on the basis of a hybrid inertial navigation system on board a vehicle (1), the navigation system being arranged to perform a first navigation calculation (N1), hybrid, using a Kalman filter that receives inertial navigation data (I) and non-inertial navigation data (E), the method being **characterized in that** it comprises the steps of:
- using the hybrid inertial navigation system to perform an inertial second navigation calculation (N2) on the basis of the inertial navigation data;
- calculating in real time a difference (ε) between the first navigation calculation and the second navigation calculation, and subjecting the difference to lowpass filtering having a convergence time longer than a period of the Kalman filter and shorter than the Schuler period; and
- using the filtered difference to correct the second navigation calculation.

2. A method of pointing an aiming device (50) on board a vehicle provided with a hybrid inertial navigation system performing the method of claim 1, wherein the corrected second navigation calculation is used for pointing the aiming device.

3. A method of aligning a first inertial navigation system on a second inertial navigation system that is a hybrid system performing the method of claim 1, wherein the first inertial navigation system is aligned on the corrected second navigation calculation (N2c).

4. A method according to claim 3, wherein the corrected second navigation calculation is prepared from the beginning of alignment, with the convergence time of the lowpass filter initially being selected to be equal to the period of the Kalman filter, and with the convergence time subsequently being a second time that is increased in application of a time variation relationship towards a predetermined value.
